## Europäisches Patentamt

## European Patent Office

## Office européen des brevets

(19)

(11) Numéro de publication: **0 174 889**
**B1**

(12) # FASCICULE DE BREVET EUROPÉEN

(45) Date de publication du fascicule du brevet:
**27.04.88**

(51) Int. Cl.⁴: **F 16 N 7/36,** B 60 K 17/34,
F 16 H 57/04

(21) Numéro de dépôt: **85401613.6**

(22) Date de dépôt: **07.08.85**

(54) **Dispositif de lubrification d'un groupe de transmission pour véhicule à deux essieux moteurs.**

(30) Priorité: **24.08.84 FR 8413212**

(43) Date de publication de la demande:
**19.03.86 Bulletin 86/12**

(45) Mention de la délivrance du brevet:
**27.04.88 Bulletin 88/17**

(84) Etats contractants désignés:
**DE GB IT**

(56) Documents cité:
**FR-A-2 097 445**
**FR-A-2 233 514**
**FR-A-2 376 357**

**MACHINE DESIGN, vol. 30, mars 1958, page 116,
Penton, Cleveland, US; "Automatic transfer valve"
Zahnradgetriebe, J. LOOMANN, 1970, Seiten 212,
262, 263**

(73) Titulaire: **AUTOMOBILES PEUGEOT, 75, avenue de
la Grande Armée, F-75116 Paris (FR)**
Titulaire: **AUTOMOBILES CITROEN, 62 Boulevard
Victor- Hugo, F-92200 Neuilly- sur- Seine (FR)**

(72) Inventeur: **Chretien, Philippe, 30 rue de la
Coutellerie, F-95300 Pontoise (FR)**

(74) Mandataire: **Moncheny, Michel, c/o Cabinet
Lavoix 2 Place d'Estienne d'Orves, F-75441 Paris
Cedex 09 (FR)**

EP 0 174 889 B1

## Description

La présente invention est relative à la lubrification des groupes de transmission qui équipent certains véhicules automobiles et qui relient à plusieurs arbres d'entraînement de roues du véhicule un arbre susceptible de tourner dans l'un ou l'autre sens, cet arbre étant général l'arbre de sortie d'un groupe motopropulseur comportant une boîte de vitesses dans laquelle peut être établi un rapport de marche arrière.

Les roues entraînées sont en particulier celles de deux essieux moteurs du véhicule et le groupe de transmission comporte divers trains d'engrenage, notamment épicycloïdaux, ayant un effet différentiel, réducteur ou répartiteur de couple.

On sait que la lubrification des engrenages est avantageusement réalisée par du liquide pulsé ou refoulé dans un circuit au moyen d'une pompe, en particulier quand les engrenages sont épicycloïdaux, car alors une simple lubrification par barbotage est insuffisante. Il est ainsi connu de lubrifier une boîte de vitesses avec une pompe à engrenages dont l'une des deux roues dentées est solidaires d'un arbre d'entrée tournant toujours dans le même sens, et qui refoule donc toujours le liquide dans le même sens dans le circuit, indépendamment du sens de rotation de l'arbre de sortie de la boîte. En revanche, le liquide ne serait plus refoulé, mais au contraire extrait du circuit si l'arbre d'entrée, ainsi que la pompe tournaient en sens inverse. Un tel agencement est décrit dans "Zahnradgetriebe, J. Looman, p. 212, 262, 263" où comme décrit dans le préambule de la revendication 1 l'arbre d'entraînement de la peut tourner dans les deux sorte que pour le sens de rotation correspondant à la marche arrière le lubrifiant est extrait du circuit.

L'invention a pour but de fournir un agencement permettant de lubrifier de façon effiace un groupe de transmission au moyen d'une pompe entraînée par un arbre susceptible de tourner dans l'un ou l'autre sens, une telle pompe étant par ailleurs connue (voir Machine Design Vol. 30 Mars 1958, p. 116, Penton Cleveland - US).

Elle concerne un dispositif de lubrification tel que défini dans la revendication 1.

Suivant d'autres caractéristiques :

- une face de l'entretoise étant appliquée de façon étanche contre ladite face du carter, dans l'une ou l'autre de ces faces débouchent, d'une part, une cavité contenant les roues dentées de la pompe et comportant lesdits orifices opposés, d'autre part, plusieurs conduits qui communiquent avec un alésage où coulisse un tiroir de commutation, tandis que des canaux creusés dans l'une ou l'autre desdites faces relient lesdits conduits, respectivement, au conduit d'admission, au conduit de refoulement ou à l'un des orifices de la pompe;

- le tiroir délimite dans l'alésage deux chambres extrêmes opposées reliées en permanence, respectivement, aux deux orifices de la pompe, et un ressort de grande flexibilité est de préférence logé dans chacune de ces chambres de manière à rappeler le tiroir en position médiane à l'arrêt; de plus, un ressort précontraint de moindre flexibilité est de préférence disposé dans l'une au moins des deux chambres de manière que le tiroir agisse en limiteur de pression à partir d'une position déterminée notablement écartée de sa position médiane.

Un dispositif de lubrification selon l'invention est décrit ci-après, avec référence aux dessins annexés parmi lesquels:

- la Fig. 1 est une vue d'ensemble du dispositif équipant un véhicule à deux essieux moteurs, avec coupe axiale partielle suivant une ligne I-I de la Fig. 2;

- la Fig. 2 est une vue partielle en coupe suivant une ligne II-II de la Fig. 1;

- et les Fig. 3 à sont des vues partielles en coupe suivant une ligne III-III de la Fig. 1 dans trois positions de fonctionnement différentes.

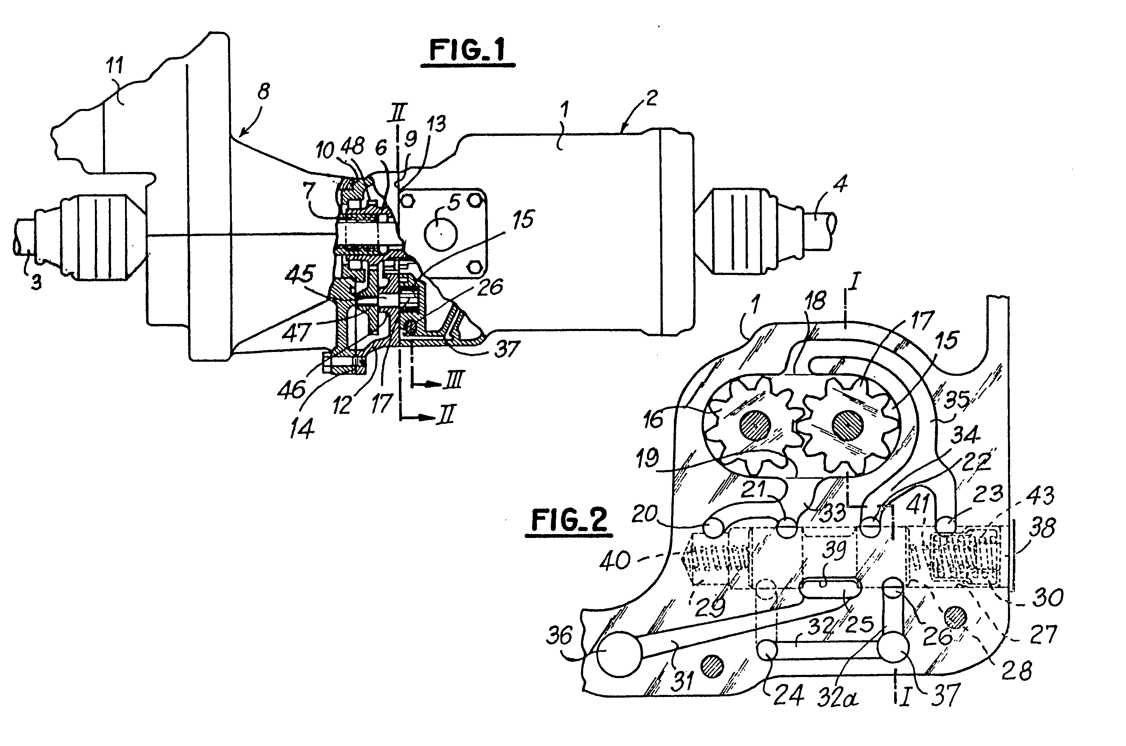

On voit sur la Fig. 1, dans un carter 1, un groupe de transmission 2 reliant à deux arbres 3, 4 et à un arbre 5, un arbre d'entrée 6 accouplé à un arbre de sortie 7 d'un groupe motopropulseur 8. Les arbres 3, 4 peuvent par exemple entraîner les roues avant, et l'arbre 5 les roues arrière d'un véhicule automobile. Le groupe 8 comporte une boîte de vitesses classique munie de plusieurs rapports de marche avant et d'un rapport de marche arrière, de sorte que les arbres 6 et 7 sont susceptibles de tourner dans l'un ou l'autre sens, selon qu'un rapport de marche avant ou de marche arrière est engagé.

L'arbre 6 traverse perpendiculairement une face 9 du carter 1, et l'arbre 7 traverse perpendiculairement une face 10 d'un carter 11 contenant le groupe 8. Entre ces faces 9 et 10 est enserrée une entretoise 12 à faces parallèles opposées 13 et 14.

Sur la face 9 du carter 1 débouchent, d'une part, une cavité 15 contenant les deux roues dentées conjuguées 16, 17 d'une pompe à engrenages et comportant deux orifices opposés 18, 19, d'autre part, plusieurs conduits 20 à 26 qui communiquent avec un alésage 27 où coulisse un tiroir de commutation 28. Ces conduits sont perpendiculaires à la face 9, sauf le conduit 24 qui est incliné. Les conduits 20 et 23 communiquent respectivement avec deux chambres opposées 29, 30 délimitées dans l'alésage 27 de part et d'autre du tiroir. Les conduits 21, 22 et 24, 25 débouchent en des emplacements intermédiaires de l'alésage 27. Le conduit 25 débouche dans ce même alésage, entre les deux conduits 21, 22 les plus proches de la partie médiane de l'alésage.

Des canaux 31 à 35 sont creusés dans la face 9.
- le canal 31 relie le conduit 25 à un conduit 36 d'admission de liquide lubrifiant;
- les canaux 32, 32a relient les conduits 24 et 26 a un conduit 37 de refoulement alimentant un circuit de lubrification des engrenages du groupe 2;

- le canal 33 relie les conduits 20 et 21 à l'orice 19 et;

- les canaux 34, 35 relient les conduits 22 et 23 à l'orifice 18.

L'alésage 27 est fermé par un bouchon 38, et le tiroir 28 comporte, au droit du conduit 25, une portion centrale de moindre diamètre 39 susceptible de communiquer avec les conduits 21, 22, 25 comme il sera indiqué plus loin. On notera cependant que le conduit 25 a une largeur suffisante pour toujours déboucher en face de la portion 39, quelle que soit la position du tiroir.

Dans chacune des chambres 29, 30, est maintenu comprimé un ressort hélicoïdal 40, 41 coaxial au tiroir et de grande flexibilité, ces ressorts prenant appui l'un sur le fond de l'alésage 27, l'autre sur un bossage central 42 du bouchon 38.

Dans la chambre 30 est en outre disposé un ressort 43 moins flexible que les deux autres ressorts et précontraint dans un boîtier télescopique 44 formé de deux douilles coulissantes et traversé d'un côté par le ressort 41 et de l'autre côté par le bossage 42. Une face du boîtier 44 est en appui sur le bouchon 38, et la face opposée est notablement espacée du tiroir quand celui-ci est dans sa position médiane de la Fig. 2.

La face de l'entretoise 12 appliquée, contre la face 9 du carter 1 recouvre la cavité 15 ainsi que les conduits 20 à 26 et les canaux 31 à 35, de sorte que ces canaux se comportent comme des conduits et que la pompe à engrenages 16, 17 refoule du liquide par l'orifice 19 vers le canal 33 ou par l'orifice 18 vers les canaux 34 et 35 selon que la roue dentée 17 tourne dans le sens des aiguilles d'une montre à la Fig. 2 ou dans l'autre sens. Cette roue 17 est entraînée à partir de l'arbre 6: elle est solidaire d'un arbre 45 parallèle aux arbres 6 et 7 et porté par un palier 46 constitué par une portion de l'entretoise 12; sur cet arbre 45 est claveté un pignon 47 engrenant avec une denture 48 de l'arbre 6.

Quand le véhicule est arrêté, donc quand les roues dentées 16, 17 sont immobiles, la pression est nulle dans les deux chambres 29, 30 et le tiroir 28 se stabilise, comme visible à la Figure 2, dans une position médiane déterminée par l'équilibre des deux ressorts 40 et 41, tandis que le ressort 43 n'intervient pas puisqu'il est maintenu comprimé dans le boîtier 44 espacé du tiroir 28.

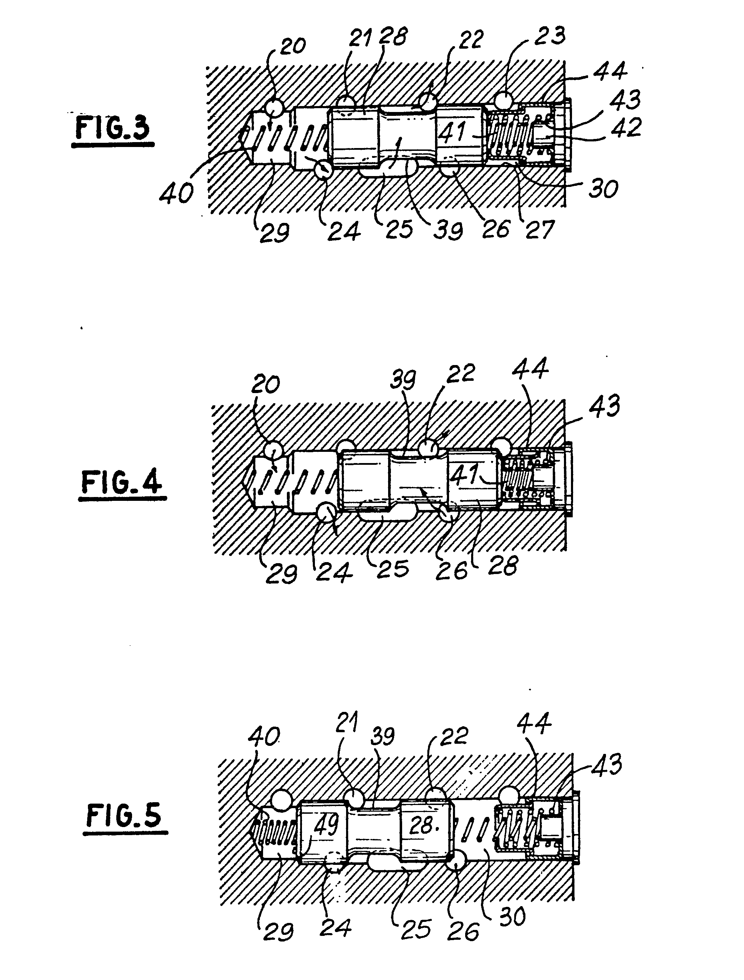

Quand le véhicule se déplace en marche avant, le sens de rotation des arbres 6 et 7 est tel que la roue dentée 17 tourne dans le sens des aiguilles d'une montre (Figure 2). Il en résulte une aspiration de liquide par l'orifice 18 dans les canaux 34 et 35, donc dans la chambre 30, et une poussée de liquide par l'orifice 19 dans le canal 33, donc dans la chambre 29. Le tiroir 28 est ainsi poussé vers la droite (Figure 3), jusqu'à buter contre le boîtier 44. Le ressort 41 est alors plus comprimé que le ressort 40.

Dans cette position du tiroir, sa portion centrale 39 relie le conduit 22 et le conduit 25, et le conduit 24 débouche dans la chambre 29. Par suite l'aspiration liquide dans le canal 34 est transmise au conduit d'admission 36 par le canal 31 et la poussée de liquide dans le canal 33 est transmis par conduits 20, 24 puis par le canal 32 au conduit de refoulement 37 du circuit de lubrification.

Si la pression de refoulement régnant dans la chambre 29 dépasse une valeur déterminée maximale, le tiroir 28 est poussé, comme indiqué à la Figure 4, à l'encontre des ressorts 41 et 43, le boîtier 44 se comprimant et la portion 39 du tiroir découvrant le conduit 26. Dès lors le liquide peut s'écouler en circuit fermé, de l'orifice aval 19 à l'orifice amont 18 de la pompe, par le canal 33, les conduits 20, 24, les canaux 32, 32a, les conduits 26, 22 et les canaux, 34, 35.

Il s'ensuit une limitation de la pression de refoulement, nécessaire notamment lorsque la vitesse de rotation des arbres 6, 7, 45 est élevée, c'est-à-dire quand le véhicule se déplace relativement vite.

Quand le véhicule se déplace en marche arrière, la roue dentée 17 tourne en sens inverse de celui des aiguilles d'une montre à la Figure 2. L'aspiration s'effectuant par le canal 33 dans la chambre 29 et la poussée de liquide vers le canal 35 s'exerçant dans la chambre 30, le tiroir se déplace vers la gauche (Figure 5), en comprimant le ressort 40 jusqu'à buter contre un épaulement approprié 49 de l'alésage. La portion centrale 39 du tiroir fait alors communiquer le conduit 21 avec le conduit 25, et le conduit 26 débouche dans la chambre 30, ce qui assure la liaison entre le conduit d'admission 36 et le canal 33 pour l'aspiration du liquide, ainsi que la communication entre le canal 35 et le conduit de refoulement 37 pour le refoulement du liquide.

Le tiroir assure ainsi automatiquement une commutation des conduits d'admission et de refoulement dès que le sens de rotation de la pompe s'inverse. Cette commutation s'effectuerait de la même manière en l'absence des ressorts 40, 41, mais ceux-ci présentent l'avantage de rappeler le tiroir en position médiane à l'arrêt de la pompe, les conduits 21 et 22 étant alors obturés, ce qui assure une rapide montée en pression dans l'une des deux chambres dès la mise en route de la pompe, donc un coulissement immédiat du tiroir dans le sens approprié comme indiqué plus haut.

Un ressort précontraint, analogue à celui 43 situé dans le boîtier 44, pourrait aussi être prévu dans la chambre 29 de manière à limiter la pression dans la chambre 30, donc la pression de refoulement quand le véhicule se déplace en marche arrière. Mais cet aménagement serait peu utile puisqu'en marche arrière la vitesse du véhicule est habituellement très réduite et la pompe, tournant donc lentement, ne risque pas d'engendrer une pression excessive du lubrifiant.

La disposition de la pompe et de la vanne de commutation au droit de la face 9 du carter 1 est relativement peu encombrante, d'un montage et d'un accès aisé. En variante au mode de réalisation décrit, la cavité contenant les roues 16, 17 peut être située dans la face 13 de l'entretoise 12 et recouverte par la face 9 du carter 1. De même, la vanne à tiroir 28 peut être aménagée dans l'entretoise 12, à proximité de la face 13 et de la cavité 15, ainsi que des conduits ou lumières tels que 20 à 26 reliant l'alésage de la vanne à des canaux creusés dans la face 13 ou dans la face 9.

La prise de mouvement de la pompe sur l'arbre d'entrée 6 du groupe 2 est particulièrement intéressante quand ce groupe comporte un réducteur de vitesse connectable, comme c'est le cas pour certains véhicules à deux essieux moteurs susceptibles de se déplacer sur de mauvais terrains à très basse vitesse, car même dans ce cas d'utilisation, le réducteur étant connecté, la vitesse de la pompe, liée à l'arbre d'entrée, est suffisante pour assurer un débit satisfaisant de lubrifiant, sans impliquer un grand dimensionnement de la pompe.

**Revendications**

1. Dispositif de lubrification pour un groupe de transmission de véhicule à deux essieux moteurs, ledit groupe de transmission étant logé dans un carter (1) et comprenant un arbre d'entrée (6) accouplé à un arbre de sortie (7) d'un groupe motopropulseur (8) contenu dans un autre carter (11) et susceptible de tourner dans l'un et l'autre sens, ledit arbre d'entrée traversant une face (9) de ce carter (1), ce dispositif comprenant une pompe à engrenages (16, 17) munie de deux orifices opposés (18, 19) reliés respectivement à un conduit d'admission (36) et à un conduit de refoulement (37), ladite pompe étant logée au droit de ladite face (9) du carter (1) et entraînée à partir de l'arbre d'entrée (6) du groupe de transmission, caractérisé en ce que la pompe est associée à une vanne de commutation automatique (27, 28) adaptée pour inverser les liaisons entre les orifices (18, 19) de la pompe et des conduits d'admission et de refoulement (36, 37), lorsque l'arbre d'entrée (6) change de sens de rotation et en ce que ledit autre carter (11) comporte une face (10) traversée par l'arbre de sortie, et une entretoise (12) à deux faces opposées parallèles (13, 14) est interposée respectivement entre lesdites faces (9, 10) des deux carters (1, 11).

2. Dispositif suivant la revendication 1, caractérisé en ce qu'une face (13) de l'entretoise (12) étant appliquée de façon étanche contre ladite face (9) du carter (1), dans l'une ou l'autre de ces faces débouchent, d'une part, une cavité (15) contenant les roues dentées (16, 17) de la pompe et comportant lesdits orifices opposés (18, 19), et d'autre part plusieurs conduits (20 - 26) qui communiquent avec un alésage (27) où coulisse un tiroir de commutation (28), tandis que des canaux (31 - 35) creusés dans l'une ou l'autre desdites faces relient lesdits conduits, respectivement, au conduit d'admission, au conduit de refoulement ou à l'un des orifices de la pompe.

3. Dispositif suivant la revendication 1, caractérisé en ce qu'un arbre (45) solidaire de l'une des roues dentées (17) de la pompe est porté par l'entretoise (12) et est solidaire d'un pignon (47) engrenant avec une denture (48) de l'arbre d'entrée (6).

4. Dispositif suivant l'une quelconque des revendications 1 à 2, caractérisé en ce que le tiroir (28) délimite dans l'alésage (27) deux chambres extrêmes opposées (29, 30) reliées en permanence, respectivement aux deux orifices (18, 19) de la pompe.

5. Dispositif suivant la revendication 4, caractérisé en ce qu'un ressort (40, 41) de grande flexibilité est de préférence logé dans chacune de ces chambres de manière à rappeler le tiroir en position médiane à l'arrêt.

6. Dispositif suivant l'une quelconque des revendications 4 ou 5, caractérisé en ce qu'un ressort précontraint (43) de moindre flexibilité est de préférence disposé dans l'une au moins des deux chambres (29, 30) de manière que le tiroir agisse en limiteur de pression à partir d'une position déterminée, notablement écartée de sa position médiane.

**Patentansprüche**

1. Schmiervorrichtung für ein Kraftübertragungsaggregat von Fahrzeugen mit zwei Antriebsachsen, wobei das Kraftübertragungsaggregat in einem Gehäuse (1) untergebracht ist und eine Eingangswelle (6) aufweist, welche mit einer Ausgangswelle (7) eines Triebwerks (8) gekuppelt ist, welches in einem anderen Gehäuse (11) enthalten ist und in der einen und anderen Richtung drehen kann, wobei die Eingangswelle eine Frontfläche (9) dieses Gehäuses (1) durchsetzt, wobei die Vorrichtung eine Zahnradpumpe (16, 17) aufweist, welche mit zwei entgegengesetzten Öffnungen (18, 19) versehen ist, die mit einer Einlaßleitung (36) bzw. einer Förderleitung (37) verbunden sind, wobei die Pumpe senkrecht zu der Frontfläche (9) des Gehäuses (1) eingebaut ist und vermittels der Eingangswelle (6) des Kraftübertragungsaggregats angetrieben wird, dadurch gekennzeichnet, daß die Pumpe einem automatischen Umschaltventil (27, 28) zugeordnet ist, welches für eine Umkehrung der Verbindungen zwischen den Öffnungen (18, 19) der Pumpe und der Einlaß- und Förderleitung (36, 37) der Pumpe, wenn die Eingangswelle (6) den Drehsinn wechselt, eingerichtet ist, und daß das andere Gehäuse (11) eine von der Ausgangswelle durchsetzte Frontfläche (10) aufweist, und ein Zwischenteil (12) mit zwei entgegengesetzten parallelen Frontflächen (13, 14) zwischen die Frontflächen (9, 10) der beiden Gehäuse (1, 11) zwischengesetzt ist.

2. Vorrichtung nach Anspruch 1, dadurch gekennzeichnet, daß, wobei eine Frontfläche (13) des Zwischenteils (12) in dichter Weise an die Frontfläche (9) des Gehäuses (1) angesetzt ist, in der einen oder anderen dieser Frontflächen einerseits ein die Zahnräder (16, 17) der Pumpe enthaltender und die entgegengesetzten Öffnungen (18, 19) aufweisender Hohlraum (15) und andererseits mehrere Leitungen (20 - 26) münden, welche mit einer Bohrung (27) in Verbindung stehen, in welcher ein Umschaltschieber (28) gleitet, während in die eine oder andere der Frontflächen eingetiefte Kanäle (31 - 35) die Leitungen jeweils mit der Einlaßleitung, der Förderleitung bzw. mit einer der Öffnungen der Pumpe verbinden.

3. Vorrichtung nach Anspruch 1, dadurch gekennzeichnet, daß eine mit dem einen der Zahnräder (17) der Pumpe fest verbundene Welle (45) durch das Zwischenteil (12) gehaltert wird und mit einem Ritzel (47) fest verbunden ist, welches mit einer Verzahnung (48) der Eingangswelle (6) kämmt.

4. Vorrichtung nach irgendeinem der Ansprüche 1 bis 3, dadurch gekennzeichnet, daß der Schieber (28) in der Bohrung (27) zwei entgegengesetzte Endkammern (29, 30) bestimmt, welche permanent entsprechend mit den beiden Öffnungen (18, 19) der Pumpe verbunden sind.

5. Vorrichtung nach Anspruch 4, dadurch gekennzeichnet, daß eine Feder (40, 41) großer Elastizität vorzugsweise in jeder dieser Kammern untergebracht ist, derart, daß der Schieber beim Anhalten in die Mittellage zurückgeholt wird.

6. Vorrichtung nach irgendeinem der Ansprüche 4 und 5, dadurch gekennzeichnet, daß eine vorgespannte Feder (43) geringerer Elastizität vorzugsweise in wenigstens einer der beiden Kammern (29, 30) angeordnet ist, derart, daß der Schieber als Druckbegrenzer anhand einer bestimmten Stellung, die beträchtlich von seiner Mittellage abweicht, wirkt.

## Claims

1. A lubricating device for a transmission unit for vehicles with two drive shafts, said transmission unit being accommodated in a housing (1) and comprising an input shaft (6) coupled to an output shaft (7) of a motive power unit (8) contained in another housing (11) and capable of turning in both directions, said input shaft traversing one face (9) of this housing (1), this device comprising a gear pump (16, 17) equipped with two opposing orifices (18, 19) respectively connected to an inlet pipe (36) and a delivery pipe (37), said pump being accommodated at right angles to said face (9) of the housing (1) and being driven by the input shaft (6) of the transmission unit, characterised in that the pump is connected to an automatic change-over valve (27, 28) adapted to reverse the connections between the orifices (18, 19) of the pump and the inlet and delivery pipes (36, 37) when the input shaft (6) changes direction of rotation and in that said other housing (11) comprises a face (10) which is traversed by the output shaft, and a bridging piece (12) having two parallel opposing faces (13, 14) is interposed between said faces (9, 10) of the two housings (1, 11) respectively.

2. A device according to claim 1, characterised in that as one face (13) of the bridging piece (12) is placed tightly against said face (9) of the housing (1), a cavity (15) containing toothed wheels (16, 17) of the pump and comprising said opposing orifices (18, 19), on the one hand, and several pipes (20 - 26) which communicate with a bore (27) in which a change-over slide valve (28) slides, on the other hand, open into one or other of these faces, while channels (31 - 35) sunk in one or other of said faces connect said pipes to the inlet pipe, to the delivery pipe or to one of the pump orifices respectively.

3. A device according to claim 1, characterised in that a shaft (45) which is integral with one of the toothed wheels (17) of the pump is supported by the bridging piece (12) and is integral with a pinion (47) meshing with the teeth (48) of the input shaft (6).

4. A device according to any one of claims 1 to 3, characterised in that the slide valve (28) defines in the bore (27) two opposing end chambers (29, 30) which are permanently connected to the two orifices (18, 19) respectively of the pump.

5. A device according to claim 4, characterised in that a highly flexible spring (40, 41) is preferably accommodated in each of these chambers so as to return the slide valve to the median position during a stoppage.

6. A device according to any one of claims 4 or 5, characterised in that a less flexible prestressed spring (43) is preferably arranged in at least one of the two chambers (29, 30) so that the slide valve acts as a pressure limiter from a predetermined position, in particular a position remote from its median position.

**FIG.1**

**FIG.2**

FIG.3

FIG.4

FIG.5